Europäisches Patentamt

European Patent Office

Office européen des brevets

(19)

(11) Veröffentlichungsnummer: **0 065 238**
**B1**

(12) # EUROPÄISCHE PATENTSCHRIFT

(45) Veröffentlichungstag der Patentschrift:
24.09.86

(21) Anmeldenummer: 82103967.4

(22) Anmeldetag: 07.05.82

(51) Int. Cl.⁴: **G 21 C 3/32,** G 21 C 1/22,
G 21 C 3/30

(54) **Brennelementbündel für einen Siedewasserreaktor.**

(30) Priorität: 15.05.81 SE 8103057

(43) Veröffentlichungstag der Anmeldung:
24.11.82 Patentblatt 82/47

(45) Bekanntmachung des Hinweises auf die Patenterteilung:
24.09.86 Patentblatt 86/39

(84) Benannte Vertragsstaaten:
BE CH DE FR GB IT LI NL

(56) Entgegenhaltungen:
DE-A-1 464 735
DE-A-2 115 406
DE-A-2 331 352
DE-A-3 148 458
DE-B-1 806 432
US-A-3 389 056

(73) Patentinhaber: AB ASEA- ATOM, S-721 83 Västeras
(SE)

(72) Erfinder: Borrman, Bo, Rörverksgatan 16, S-72474
Västeras (SE)
Erfinder: Leine, Lars, Malstensgatan 5, S-72353
Västeras (SE)
Erfinder: Nylund, Olof, Dipl.- Ing., Ragnaröksgatan
17, S-72017 Västeras (SE)
Erfinder: Ode, Bengt, Löpargatan 80, S-72241
Västeras (SE)

(74) Vertreter: Boecker, Joachim, Dr.- Ing.,
Rathenauplatz 2-8, D-6000 Frankfurt a.M. 1 (DE)

EP 0 065 238 B1

LIBER, STOCKHOLM 1986

## Beschreibung

Die vorliegende Erfindung betrifft ein Brennelementbündel für einen Siedewasserreaktor gemäß dem Oberbegriff des Anspruches 1. Ein solches Brennelementbündel ist beispielsweise bekannt aus der GB-PS 931 676 oder der US-PS 3 389 056.

Bei dem aus der GB-PS 931 676 bekannten Brennelementbündel sind die Brennstäbe auf vier Teilbündel verteilt, von denen jedes mit einer oberen und einer unteren Gitterplatte (genauer gesagt Teilgitterplatte) versehen ist. Jeder Brennstab hat geschlitzte Endabschnitte, mit denen der Brennstab in Eingriff mit der oberen bzw. unteren Teilgitterplatte steht und durch Hartlöten an dieser befestigt ist.

Bei dem aus der US-PS 3 389 056 bekannten Brennelementbündel sind die Brennstäbe auf vier Teilbündel verteilt, von denen jedes eine untere und eine obere Teilgitterplatte hat. Von diesen Teilbündeln gehen nach oben mehrere Arme und eine mit Innengewinde versehene Hülse aus, die eine Griffvorrichtung für das Teilbündel bilden und gleichzeitig in der oberen Kerngitterplatte (Gesamtgitterplatte) des Reaktorkerns befestigt sind. Nach Abheben der oberen Kerngitterplatte können die Teilbündel mit Hilfe der genannten Fixiervorrichtungen einzeln nach oben herausgezogen werden. Eine Vorrichtung zum Herausheben des gesamten Brennelementbündels ist nicht vorhanden.

In der nicht vorveröffentlichten deutschen Patentanmeldung P 31 48 458.1 wird ein Brennelementbündel beschrieben, bei dem die Brennstäbe auf vier Teilbündel verteilt sind. Das Brennelementbündel ist mit einem Traggriff versehen, der jedoch an dem Brennstoffkasten befestigt ist, so daß es nicht möglich ist, sämtliche Teilbündel mit einem einzigen Hebevorgang aus dem Brennstoffkanal herauszuheben. Dies hat den Nachteil, daß erhebliche Zeit erforderlich ist, wenn der Brennstoff des Brennelementbündels überprüft werden soll oder wenn in einem bestimmten Abbrandstadium die Lagen und/oder Orientierungen der einzelnen Teilbündel geändert werden sollen, um eine bessere Ausnutzung des Brennstoffes zu erreichen.

Der Erfindung liegt die Aufgabe zugrunde, ein Brennstoffelementbündel der eingangs genannten Art zu entwickeln, bei dem die Handhabung des Brennstoffes in einfacherer und schnellerer Weise durchgeführt werden kann.

Zur Lösung dieser Aufgabe wird ein Brennelementbündel der eingangs genannten Art vorgeschlagen, welches erfindungsgemäß die im kennzeichnenden Teil des Anspruches 1 genannten Merkmale hat.

Vorteilhafte Weiterbildungen der Erfindung sind in den Unteransprüchen genannt.

Anhand der in den Figuren gezeigten Ausführungsbeispiele soll die Erfindung näher erläutert werden. Es zeigen

Fig. 1 einen Vertikalschnitt durch eine erste Ausführungsform der Erfindung längs der Linie I-I in Fig. 2 bis 5,

Fig. 2 bis 5 Horizontalschnitte längs der Linien II-II, III-III, IV-IV bzw. V-V in Figur 1,

Fig. 2A eine zu der ersten Ausführungsform gehörende Hubplatte in Draufsicht,

Fig. 2B die Gitterplatte gemäß Fig. 2A im Schnitt längs der Linie B-B in Fig. 2A,

Fig. 3A eine alternative Ausführungsform der in Fig. 3 gezeigten oberen Teilgitterplatte,

Fig. 6 eine zweite Ausführungsform eines Brennelementbündels gemäß der Erfindung im partiellen Vertikalschnitt längs der Linie VI-VI in Fig. 7,

Fig. 7 und 8 Horizontalschnitte längs der Linien VII-VII bzw. VIII-VII in Fig. 6,

Fig. 9 eine dritte Ausführungsform eines Brennelementbündels gemäß der Erfindung im partiellen Vertikalschnitt längs der Linie IX-IX in Fig. 10 und 11,

Fig. 10 und 11 Horizontalschnitte längs der Linien X-X bzw. XI-XI in Fig. 9,

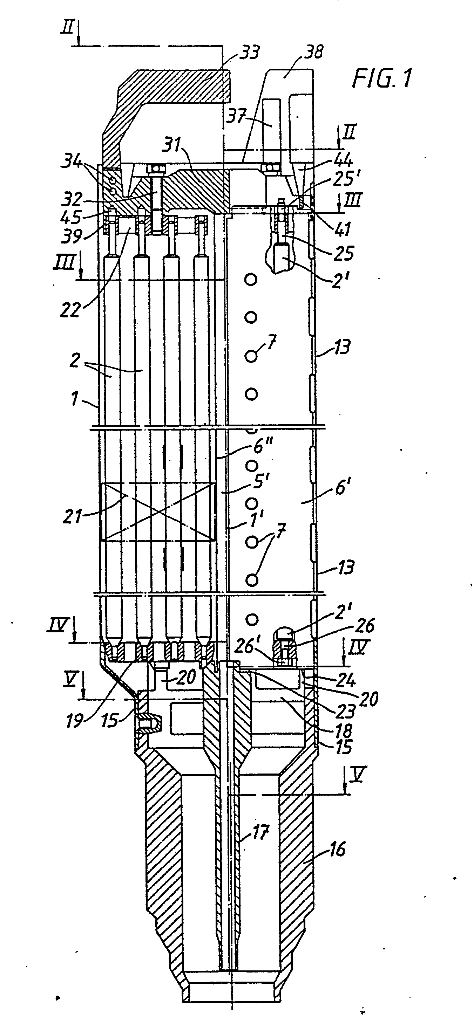

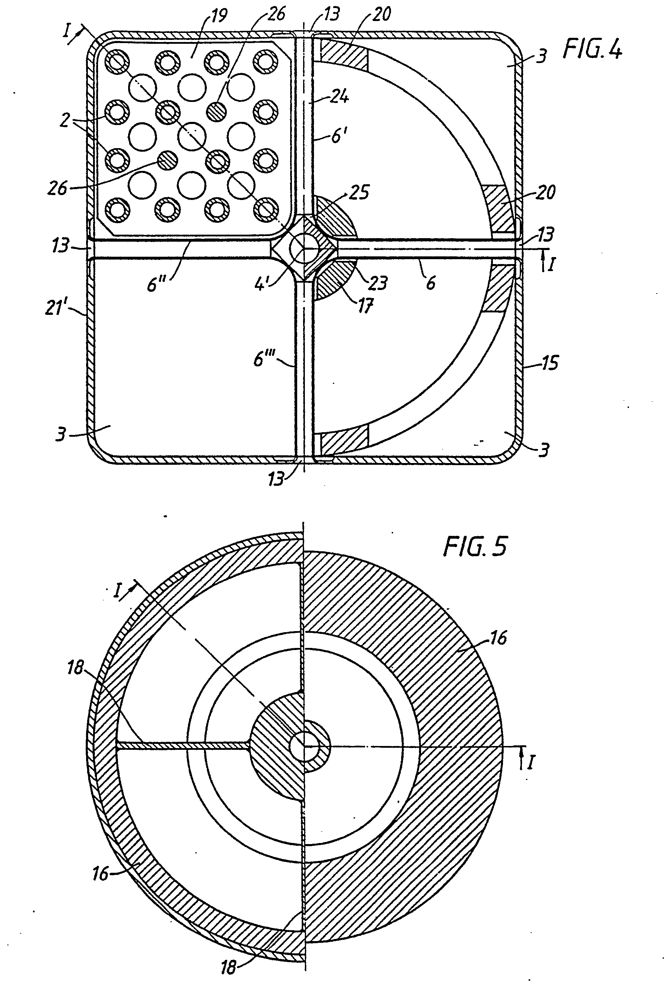

In den Figuren 1 bis 5 bezeichnet 1 einen Brennstoffkasten für ein Brennelementbündel eines Siedewasserreaktors. Die vertikale Mittellinie des Brennelementbündels ist mit 1' bezeichnet. Der Brennstoffkasten 1 umschließt vierundsechzig Brennstäbe 2 und 2', die gleichmäßig auf vier Teilbündel verteilt sind, die jeweils von einem Teilkasten 3 umgeben sind. Die Teilkästen werden dadurch gebildet, daß die Brennstoffkästen der Brennelementbündel längs eines vertikalen Abschnitts von ungefähr der Länge der Brennstäbe von einer hohlen, mit kreuzförmigem Querschnitt ausgeführten Versteifungskonstruktion in vier Teile geteilt wird. Die Versteifungskonstruktion hat eine vertikale Mittellinie 4' und vier Versteifungsflügel 4. Jeder Flügel 4 hat einen vertikalen Strömungskanal 5' für Moderatorwasser. Die Versteifungskonstruktion ist aus vier langgestreckten, vertikalen Blechelementen 6, 6', 6'', 6''' mit L-förmigem Querschnitt zusammengesetzt. jeder Versteifungsflügel 4 besteht aus zwei parallelen im Abstand voneinander angeordneten Blechabschnitten, von denen jeder zu einem der L-förmigen Blechelemente gehört. In jedem Versteifungsflügel sind mehrere in die Blechelemente eingearbeitete aufeinander gerichtete Stutzen 7, die mit einer Schweißnaht 7' zusammengeschweißt sind, so daß mehrere hydraulische Verbindungen zwischen benachbarten Teilkästen 3 bestehen.

Der Brennstoffkasten 1 besteht aus Zircaloy® und ist an einer Hülse 15 aus Zircaloy festgeschweißt, die einen unteren Abschnitt mit quadratischem Querschnitt hat. Die Hülse 15 ist an einem Unterteil 16 festgeschraubt, das unten eine Einlauföffnung für das das Brennelementbündel durchströmende Wasser hat. In der Mitte des Unterteils ist ein Wasserrohr 17 mittels mehrerer radialer Arme 18 befestigt, die am Unterteil 16 und am Wasserrohr 17 festgeschweißt sind. Jeder Teilkasten 3 enthält ein Teilbündel von sechzehn Brennstäben, die voneiner zugehörigen unteren Gitterplatte 19 getragen werden. Die vier unteren Gitterplatten ruhen auf dem oberen Ende des Wasserrohrs 17 und auf mehreren axialen Vorsprüngen 20, die im oberen Ende des Unterteils 16 angebracht sind. Jedes Teilbündel enthält mehrere Abstandshalter 21 sowie eine obere Teilgitterplatte 22. Die unteren Enden der langgestreckten L-förmigen Blechelemente 6, 6', 6'', 6''' greifen in vier horizontale Nuten 23, die im oberen Ende des Wasserrohrs 17 angebracht sind, wobei das Innere der Versteifungskonstruktion hydraulisch mit dem Wasserrohr 17 verbunden ist. Jeder Versteifungsflügel 4 hat einen dichten Boden 24, dessen radial innerer Rand einen Teil des Umfangs einer zentralen Einlauföffnung 23 bildet, die für einen durch die Kanäle 5' und 5'' strömenden Moderatorwasserfluß vorgesehen ist. Jeder Kanal 5' steht über mehrere Stutzen 13 mit der Umgebung in Verbindung.

In jedem Teilbündel sind zwei der sechzehn Brennstäbe als tragende Stäbe 2' ausgebildet. Diese sind wie die übrigen Brennstäbe 2 mit ihren unteren Endstopfen 26 in je einem durchgehenden Loch in der unteren Gitterplatte 19 und mit ihren oberen Endstopfen 25 in je einem im wesentlichen kreiszylindrischen Abschnitt der oberen Teilgitterplatte 22 angeordnet. Bei den tragenden Brennstäben 2' sind die oberen Endstopfen 25 allerdings durch die obere Teilgitterplatte 22 geführt und mit Muttern 25' versehen, und die unteren Endstopfen 26 sind durch die untere Gitterplatte 19 geführt und mit Muttern 26' versehen.

Jede obere Teilgitterplatte 22 hat sechzehn in einem quadratischen Gitter angeordnete Brennstabpositionen und enthält sechzehn im wesentlichen hohlzylindrische Abschnitte 27 sowie mehrere Verbindungsabschnitte, von denen der eine als Mittelabschnitt dient und mit 28' bezeichnet ist, während die übrigen mit 28 bezeichnet sind. Die Mittelabschnitte 28 und 28' sind, genau wie die hohlzylindrischen Abschnitte, integrierte Teile der oberen Teilgitterplatte. Die Verbindungsabschnitte 28 und 28' verbinden die hohlzylindrischen Abschnitte miteinander und begrenzen zusammen mit deren äußeren Flächen mehrere in der oberen Teilgitterplatte 22 vorhandene Strömungsöffnungen 29 für Reaktorkühlmittel. Der mittlere Verbindungsabschnitt 28' ist direkt mit den vier unmittelbar am Mittelpunkt der oberen Teilgitterplatte liegenden hohlzylindrischen Abschnitten 27 verbunden. Zwei derselben liegen in einer Vertikalebene, die durch den Mittelpunkt der oberen Teilgitterplatte, jedoch nicht durch die Mittellinie des Brennelementbündels hindurchgeht. Diese beiden hohlzylindrischen Abschnitte umschließen je einen Endstopfen 25 eines tragenden Stabes 2' des Teilbündels. Der mittlere Verbindungsabschnitt 28 jeder oberen Teilgitterplatte hat in seinem Mittelpunkt ein Gewindeloch 30, und die vier oberen Teilgitterplatten sind an einer gemeinsamen Hubplatte 31 mit vier Schraubbolzen 32 befestigt, die durch ihr betreffendes Loch 32' in der Hubplatte 31 gehen und derart in dem ihnen zugeordneten Loch 30 festgeschraubt sind, daß nach oben gerichtete Flächen der oberen Teilgitterplatten 22 gegen nach unten gerichtete Flächen der Hubplatte 31 gepreßt werden.

Die Köpfe der Schraubbolzen 32 liegen an dem nach oben gerichteten Flächenabschnitt 36 ihrer zugehörigen Hubplatte 31 an. Die Hubplatte 31 hat vier Eckabschnitte 40, die zusammen mit vier verbindenden horizontalen, stabförmigen Abschnitten 41 einen Rahmen bilden. Die Eckabschnitte 40, die stabförmigen Abschnitte 41 sowie ein Armkreuz 42 sind integrierte Teile der Hubplatte 31. Zwei Eckabschnitte 40 haben je ein Loch 43, um den Durchtritt von Reaktorkühlmittel zu erleichtern, während die beiden anderen Eckabschnitte mit einem Griff 33 versehen sind, der mit seinen beiden Enden an der Hubplatte mit zwei durchgehenden horizontalen Bolzen 34 befestigt ist, welche durch entsprechende Löcher 34' in einer an der Hubplatte angebrachten Tragöse 35 geführt und durch Schweißen fixiert sind. Alternativ kann der Griff 33 als integriertes Teil der Hubplatte 31 ausgebildet sein.

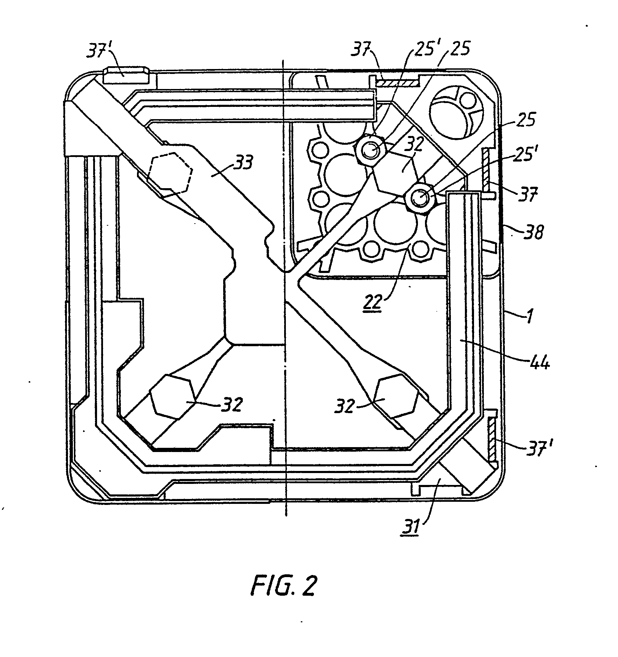

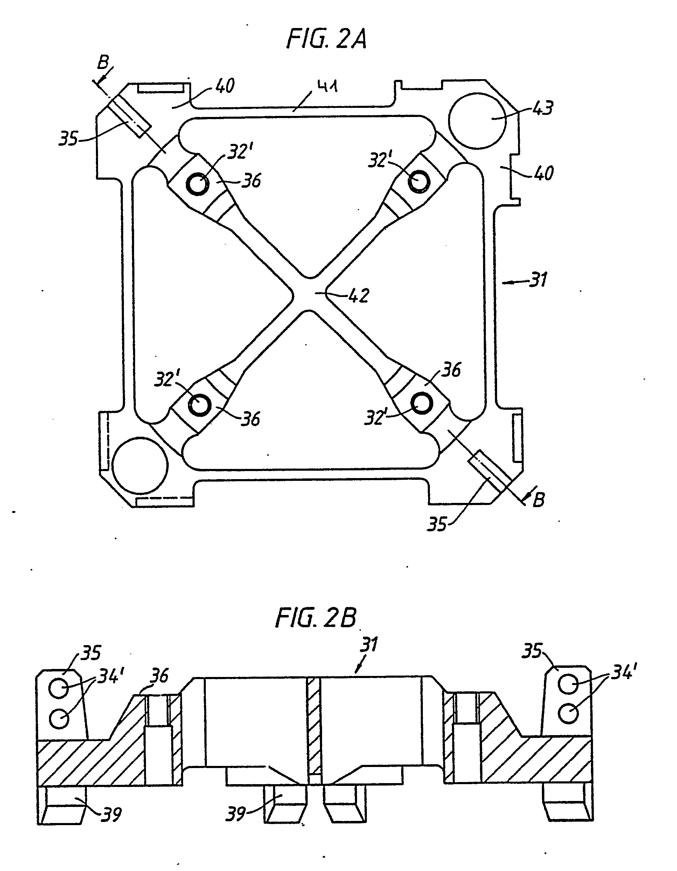

Die Hubplatte 31 ist in einer Ecke mit zwei im wesentlichen vertikal angeordneten Blattfedern 37 versehen, die an der Innenseite einer an dem oberen Rand des Brennstoffkastens festgeschweißten Hebeöse 38 anliegen. Diese Hebeöse ist so dimensioniert, daß sie zusammen mit einer gleichen, in der gegenüberliegenden Ecke angeordneten Hebeöse das Gewicht des ganzen Brennelementbündels tragen kann. Ferner ist die Hubplatte mit zwei im wesentlichen vertikal angeordneten Blattfedern 37' (Fig. 2) versehen, die an vertikalen Flächen der Hubplatte des Reaktorkerns anliegen. In jeder Ecke hat die Hubplatte 31 zwei nach unten gerichtete Vorsprünge 39 (Fig. 28) mit vertikalen Stützflächen, die an entsprechenden vertikalen Flächenabschnitten der oberen Teilgitterplatten 22 anliegen. Die Hubplatte 31 trägt eine Verteilerrinne 44 für Spritzwasser.

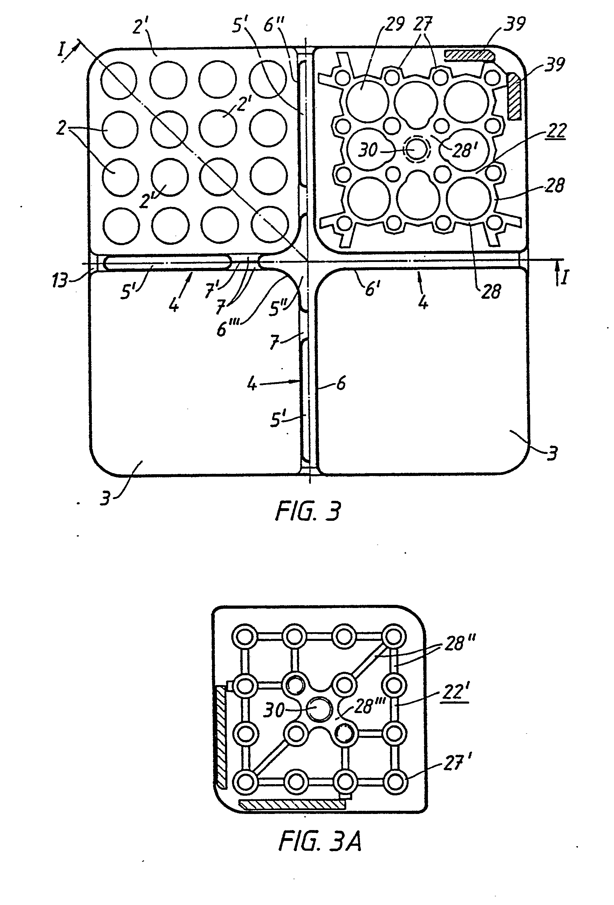

Alternativ kann man statt der oberen Teilgitterplatte 22 die in Figur 3A gezeigte obere Teilgitterplatte 22' verwenden, bei der ein mittlerer Verbindungsabschnitt mit 28''' bezeichnet ist, während die übrigen Abschnitte mit 28'' bezeichnet sind. Die Verbindungsabschnitte verbinden sechzehn hohlzylindrische Abschnitte 27'. Die beiden diagonal verlaufenden Verbindungsabschnitte liegen gerade unter je einem Arm des Armkreuzes 42 der Hubplatte.

Wie Figur 1 zeigt, sind mehrere Abschnitte der Hubplatte, die an hohlzylindrischen Abschnitten 27 einer der oberen Teilgitterplatten anliegen, mit je einer Ausbohrung 45 versehen, von denen jede einen Endstopfen eines Brennstabes 2 aufnehmen kann, wenn diese sich aufgrund hoher Temperatur verlängert.

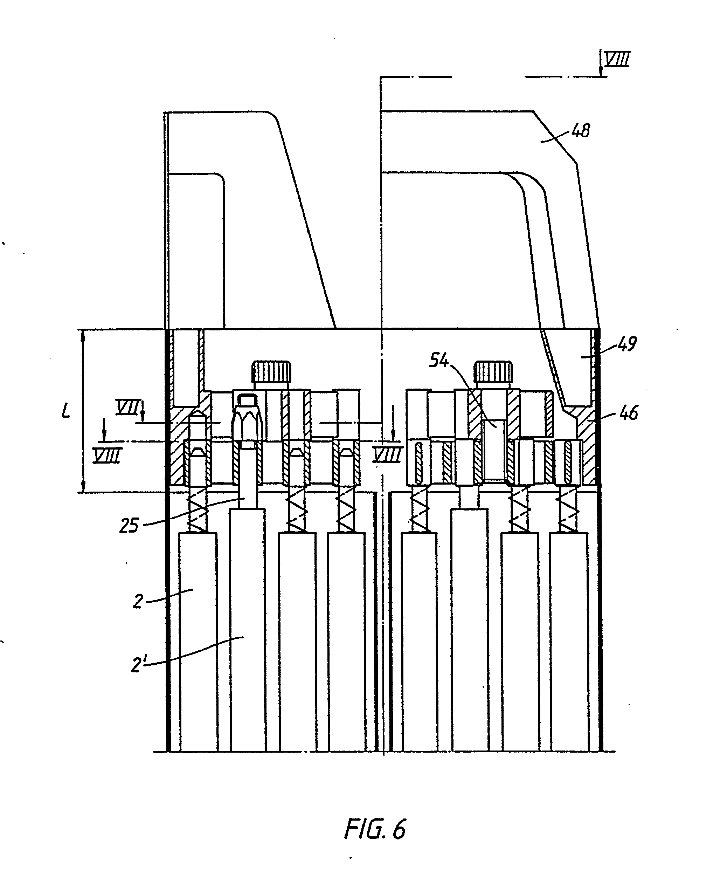

Das in den Figuren 6, 7 und 8 gezeigte Brennelementbündel unterscheidet sich von dem vorstehend beschriebenen nur durch Unterschiede bei der Hubplatte 46 und den oberen Teilgitterplatten 47. Die Hubplatte 46 hat einen Griff 48, der als integriertes Teil ausgebildet ist. Nach oben gerichtete Flächen der Hubplatte bilden den Boden einer Wasserverteilerrinne 49. Jede obere Teilgitterplatte hat mehrere hohlzylindrische Abschnitte 50 und einen mittleren Verbindungsabschnitt 51, während die übrigen Verbindungsabschnitte zwischen den hohlzylindrischen Abschnitten 50 mit 52 bezeichnet sind. Jeder Verbindungsabschnitt 51 hat ein zentrales Gewindeloch 53. Vier Bolzen führen durch die Hubplatte 46 und je eines der Löcher 55 und sind in je einem Gewindeloch 53 festgeschraubt. Jede Hubplatte 46 hat mindestens fünf langgestreckte senkrecht zu und zwischen vertikalen Brennstabachsen in Diagonalrichtungen verlaufende Abschnitte, deren Horizontalprojektionen mindestens 80 % ihres jeweiligen entsprechenden Verbindungsabschnittes 51 oder 52 der oberen Teilgitterplatte 47 decken. Das Brennelementbündel enthält insgesamt acht tragende Brennstäbe, und zwar zwei in jedem Teilbündel. Diese Brennstäbe liegen in einer Vertikalebene durch die Mittellinie des Teilbündels bzw. des Brennelementbündels.

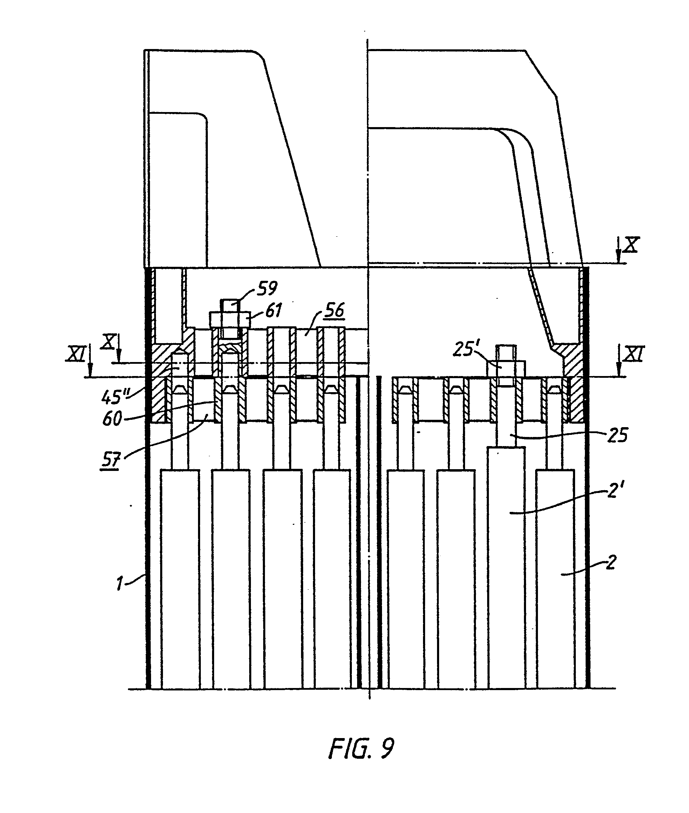

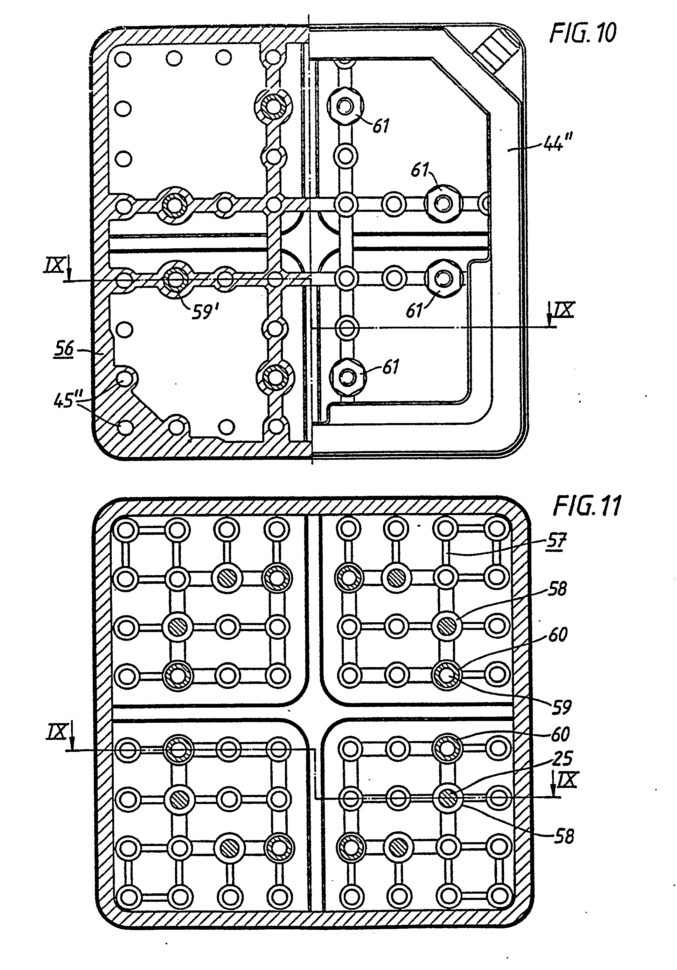

Die in den Figuren 9, 10 und 11 gezeigte Ausführungsform unterscheidet sich von den vorstehend beschriebenen im wesentlichen dadurch, daß die Hubplatte 56 und die vier oberen Teilgitterplatten 57 anders ausgebildet sind. Jede obere Teilgitterplatte 57 hat sechzehn hohlzylindrische Abschnitte, die sechzehn Brennstabpositionen entsprechen. Jedes Teilbündel enthält zwei tragende Brennstäbe 2', deren Endstopfen mit 25 bezeichnet sind und die in zwei hohlzylindrischen Abschnitten 58 angeordnet sind, von denen jeder mit einer Mutter 25' versehen ist.

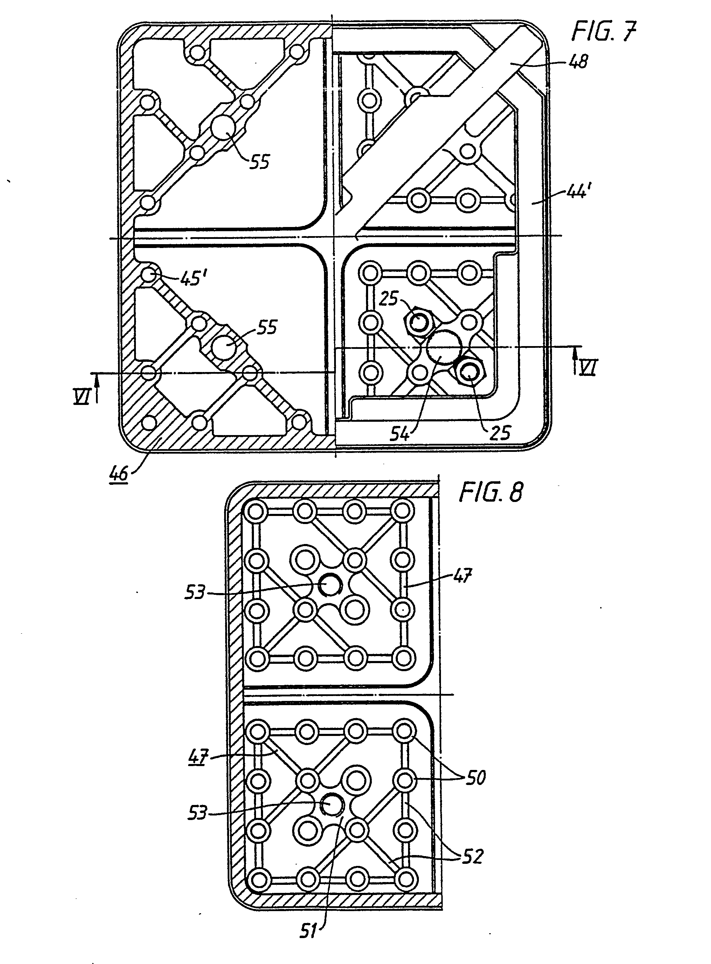

Jede obere Teilgitterplatte ist an der Hubplatte 56 mit Hilfe von zwei nach oben verlängerten hohlzylindrischen Abschnitten 60 befestigt, von denen jeder einen mit Gewinde versehenen massiven Endabschnitt 59 trägt. Jeder Endabschnitt 59 ist durch je ein Loch 59' in der Hubplatte 56 geführt und mit je einer Mutter 61 versehen. Die Löcher 45'' haben denselben Zweck, wie die in den Figuren 1 und 7 gezeigten Löcher 45 bzw. 45'.

Die Figuren zeigen nur Brennelementbündel mit vierundsechzig Brennstabpositionen. Die Erfindung umfaß jedoch auch Brennelementbündel mit einer größeren oder kleineren Anzahl von Brennstabpositionen, z.B. ein Brennelementbündel mit vier Teilbündeln zu je fünfundzwanzig Brennstabpositionen.

## Patentansprüche

1. Brennelementbündel für einen Siedewasserreaktor mit vertikalen Brennstäben, die von einem Brennstoffkasten (1) mit vertikaler Längsachse (1') umgeben und auf vier Teilbündel verteilt sind, wobei die Brennstäbe (2, 2') jedes Teilbündels jeweils mit Hilfe einer oberen und einer unteren Teilgitterplatte (22',19) und mehrerer vertikal hintereinander angeordneter, nur die Brennstäbe des Teilbündels erfassender Abstandshalter (21) positioniert sind und jedes Teilbündel auf je einer unteren Teilgitterplatte (19) ruht, wobei die überwiegende Zahl der Brennstäbe jedes Teilbündels in der unteren Teilgitterplatte (19) vertikal nach oben verschiebbar angeordnet ist und zumindest ein Brennstab jedes Teilbündels ein tragender Stab (2') ist, der in einer lösbaren zugkraftübertragenden Verbindung mit der unteren Teilgitterplatte (19) des Teilbündels steht, dadurch gekennzeichnet, daß die Teilbündel im Verhältnis zueinander durch eine gemeinsame, von einem oberen Abschnitt des Brennstoffkastens umschlossene Hubplatte (31; 46; 56) positioniert sind, die mit den unteren Teilgitterplatten mittels der tragenden Stäbe (2') jeweils in einer von oben lösbaren zugkraftübertragenden Verbindung angeordnet ist, und daß die Hubplatte mit einem Griff (33) versehen ist, über den sämtliche Teilbündel in einem Hebevorgang gleichzeitig heraushebbar sind oder mit dessen Hilfe - nach Lösen der genannten Verbindungen - das Wegheben der Hubplatte möglich ist, wonach die Teilbündel mit den zugehörigen oberen und unteren Teilgitterplatten individuell entfernbar sind.

2. Brennelementbündel nach Anspruch 1, dadurch gekennzeichnet, daß der Brennstoffkasten (1) einen oberen Kanalabschnitt (L) hat, dessen Projektion auf eine gedachte, durch den mittleren Abschnitt der Brennstäbe verlaufende Horizontalebene ein Quadrat mit abgerundeten Ecken ergibt, welches die Teilbündel auf solche Weise umgibt, daß die vier Quadranten des Quadrates je ein Teilbündel umgeben, daß mehrere Zwischenräume zwischen den Teilbündeln jeweils mit Kanalwänden (6, 6', 6'' 6''') versehen sind, die sich über einen überwiegenden Teil der vertikalen Länge der Brennstäbe erstrecken, jedoch nur unterhalb des oberen Kanalabschnittes (L), und die vertikale Flußwege (5') für relativ kaltes Moderatorwasser begrenzen und eine horizontale Verbindung zwischen diesem Moderatorwasser und den Brennstäben verhindern, und daß die Hubplatte (31; 46; 56) in dem oberen Kanalabschnitt (L) angeordnet ist.

Brennelementbündel nach Anspruch 1, dadurch gekennzeichnet, daß die Teilbündel mit je einer unter der gemeinsamen Hubplatte (31; 46; 56) angeodrneten oberen Teilgitterplatte (22; 22'; 47; 57) versehen sind, daß die tragenden Stäbe (2') mit ihren oberen Enden in zugkraftübertragender Verbindung mit der zugehörigen oberen Teilgitterplatte (22; 22'; 47; 57) stehen und daß jede Teilgitterplatte abnehmbar an der gemeinsamen Hubplatte mit einer Verbindungsvorrichtung (32; 54; 59) befestigt ist, die zum Herausheben eines Teilbündels mit zugehöriger unterer Teilgitterplatte (19) und oberer Teilgitterplatte geeignet ist.

Brennelementbündel nach Anspruch 3, dadurch gekennzeichnet, daß jede obere Teilgitterplatte an der Unterseite der gemeinsamen Hubplatte mittels der genannten abnehmbaren Verbindungsvorrichtung festgeklemmt ist, wobei mehrere an einer oberen Teilgitterplatte anliegende Abschnitte der gemeinsamen Hubplatte mit je einem Loch (45; 45'; 45'') versehen sind, welches koaxial mit einem entsprechenden Brennstab angeordnet ist und einen etwas größeren Durchmesser hat als der Endstopfen des Brennstabes.

5. Brennelementbündel nach Anspruch 3, dadurch gekennzeichnet, daß jede obere Teilgitterplatte sechzehn in einem quadratischen Gitter angeordnete Brennstabpositionen und sechzehn entsprechende, im wesentlichen hohlzylindrische Abschnitte (27; 27'; 50) sowie mehrere Verbindungsabschnitte (28, 28', 28'' 28''', 52, 51) hat, welche letzteren die hohlzylindrischen Abschnitte miteinander verbinden und zusammen mit äußeren Flächen derselben mehrere in der oberen Teilgitterplatte angeordnete Durchströmöffnungen (29) für Reaktorkühlmittel begrenzen, daß einer der Verbindungsabschnitte ein mittlerer Abschnitt (28', 28''', 51) ist, der direkt mit den vier unmittelbar am Mittelpunkt der oberen Teilgitterplatte befindlichen hohlzylindrischen Abschnitten verbunden ist, von denen zwei in derselben Vertikalebene durch den genannten Mittelpunkt liegen und je einen Endstopfen (25) eines tragenden Stabes umschliessen, und daß der genannte mittlere Abschnitt mit der Verbindungsvorrichtung (32; 54) mechanisch verbunden ist.

6. Brennelementbündel nach Anspruch 5, dadurch gekennzeichnet, daß die Verbindungsvorrichtung einen Bolzen (32; 54) enthält, dessen Kopf an einer nach oben gerichteten Fläche der gemeinsamen Hubplatte anliegt und der durch die Hubplatte hindurchgeht und mit seinem unteren Ende in einem im Zentrum des mittleren Abschnittes (28', 28'''; 51) angebrachten Gewindeloch (30; 53) festgeschraubt ist.

7. Brennelementbündel nach einem der vorhergehenden Ansprüche, dadurch gekennzeichnet, daß die gemeinsame Hubplatte einen rahmenähnlichen, im wesentlichen quadratischen Abschnitt enthält, der ohne nennenswertes Spiel von einem entsprechenden Abschnitt des Brennstoffkastens umgeben wird und der mit einer sich über den überwiegenden Teil des Umfanges erstreckenden Verteilerrinne (44, 44', 44'') für Wasser versehen ist.

**Claims**

1. Fuel assembly for a boiling water reactor with vertical fuel rods being surrounded by a fuel channel device (1) with a vertical longitudinal axis (1') and being divided in four partial bundles, whereby the fuel rods (2, 2') of each partial bundle are positioned with the help of an upper and a lower partial grid plate (22, 19) and a plurality of spacers (21), which are arranged vertically one after the other and act only on the fuel rods of the partial bundle in question, each partial bundle resting on a corresponding lower partial grid plate (19), whereby the majority of the fuel rods of each partial bundle is arranged with vertical movability in the lower partial grid plate (19) and at least one fuel rod of each partial bundle is a supporting rod (2'), which is secured to the lower partial grid plate (19) of the partial bundle by means of a detachable tensile-force transmitting connection, characterized in that the partial bundles are positioned in relation to one another by means of a common lifting plate (31; 46; 56), which is surrounded by an upper section of the fuel channel device and which is secured to the lower partial grid plates by means of said supporting rods (2') via a tensile-force transmitting connection device which is detachable from the top end, and that the lifting plate is provided with a bail (33) by means of which all partial bundles can be lifted simultaneously by one and the same lifting operation or by means of whichafter detachment of said connection devices - the lifting plate is removable, whereupon the partial bundles with their respective upper and lower partial grid plates are individually removable.

2. Fuel assembly according to claim 1, characterized in that said fuel channel device (1) comprises an upper channel portion (L) the proj ection of which on an imaginary horizontal plane extending through the mid-portion of the fuel rods forms a square with rounded corners, which channel section (L) surrounds said partial bundles such that the four quadrants of the square surround one partial bundle each, that several spaces between the partial bundles are provided with corresponding channel walls (6, 6', 6'', 6'''), which extend along a predominant part of the vertical length of the fuel rods, but only below said upper channel section (L), and which define vertical flow paths (5') for relatively cool moderator water and prevent horizontal communication between said moderator water and the fuel rods, and that the lifting plate (31; 46; 56) is arranged in the upper channel section (L).

3. Fuel assembly according to claim 1, characterized in that the partial bundles are each provided with an upper partial grid plate (22; 22'; 47; 57) arranged below the common lifting plate, that the supporting rods (2') are tied with their upper ends in a tensile-force transmitting connection to the corresponding upper partial grid plate (22; 22'; 47; 57), and that each partial grid plate is detachably secured to the common lifting plate, and that each partial grid plate is detachably secured to said common lifting plate by means of a connection device (32; 54; 59), which is adapted for lifting a partial bundle with its corresponding lower partial grid plate (19) and upper partial grid plate.

4. Fuel assembly according to claim 3, characterized in that each upper partial grid plate is clampingly connected to the lower side of said common lifting plate by means of said detachable connection device, whereby several portions of said common lifting plate which contact an upper partial grid plate are provided with a hole (45; 45'; 45''), which is arranged coaxially with a corresponding fuel rod and has a somewhat greater diameter than the end plug of the fuel rod.

5. Fuel assembly according to claim 3, characterized in that each upper partial grid plate is formed with sixteen fuel rod positions arranged in a square lattice and with sixteen corresponding substantially hollow-cylindrical portions (27; 27'; 50) as well as a plurality of connecting portions (28, 28', 28'', 28''', 52, 51), the latter connecting said hollow-cylindrical portions with one another and together with outer surfaces of the hollow-cylindrical portions define a plurality of passageway openings (29) for reactor coolant in the upper partial grid plate, that one of the connecting portions constitutes a central portion (28', 28'''', 51), which is directly connected to the four hollowcylindrical portions located immediately at the mid-point of the upper partial grid plate, two of them lying in the same vertical plane extending through said mid-point and surrounding each one end plug (25) of a supporting rod, and that said central portions is mechanically secured to the connecting device (32; 34).

6. Fuel assembly according to claim 5, characterized in that said connection device comprises a bolt (32; 54), the head of which makes contact with an upwardly facing surface of said common lifting plate, said bolt passing through the lifting plate and being screwed with its lower end into a threaded hole (30; 53), which is provided in the center of said central portions (28', 28''''; 51).

7. Fuel assembly according to any of the preceding claims, characterized in that the common lifting plate comprises a frame-like, substantially square portion, which is surrounded without mentionable play by a corresponding portion of said fuel channel device and is provided with a water distributing channel (44, 44', 44''), which extends along a predominant part of the circumference.

**Revendications**

1. Faisceau d'éléments combustibles pour un réacteur à eau bouillante, avec des crayons combustibles qui sont entourés d'un boitier de combustible (1) à axe longitudinal (1') vertical et qui sont répartis sur quatre faisceaux partiels, les crayons combustibles (2, 2') de chaque faisceau partiel étant positionnés respectivement à l'aide d'une plaque en treillis partielle supérieure et inférieure (22, 29) et à l'aide de plusieurs entretoises (21) disposées verticalement les unes derrière les autres et ne saisissant que des crayons combustibles du faisceau partiel et chaque faisceau partiel reposant sur une plaque en treillis partielle inférieure (19), la réalisation étant telle que le plus grand nombre de crayons combustibles de chaque faisceau partiel est disposé dans la plaque en treillis partielle inférieure (19) de façon à pouvoir être déplacé vers le haut et qu'au moins un crayon combustible de chaque faisceau partiel est un crayon porteur (2') qui est en liaison détachable et à transmission de forces de traction, avec la plaque en treillis partielle inférieure (19) du faisceau partiel, caractérisé par le fait que les faisceaux partiels sont positionnés l'un par rapport à l'autre par une plaque de levage commune (31; 46; 56) qui est entourée par une section supérieure du boîtier de combustible et qui est disposée de manière à être en liaison à transmission de forces de traction, détachable par le haut, à l'aide des crayons porteurs (2'), et que la plaque de levage est pourvue d'une poignée (33) à l'aide de laquelle tous les faisceaux partiels sont susceptible d'être soulevés en même temps et pendant une opération de levage, ou à l'aide de laquelle -et après suppression desdites liaisons- le levage de la plaque de levage est possible, après quoi les faisceaux partiels peuvent être enlevés individuellement et avec les plaques en treillis partielles supérieures et inférieures associées.

2. Faisceau des éléments combustibles selon la revendication 1, caractérisé par le fait que la boîte de combustible (1) possède une section de canal supérieure (L) dont la projection sur un plan horizontal imaginaire et passant par la section médiane des crayons combustibles, est un carré à sommets arrondis, qui entoure de telle façon les faisceaux partielles que les quatres cadrans du carré entourent chacun un faisceau partiel, que plusieurs interalles entre les faisceaux partiels sont chacun pourvus de parois de canaux (6, 6', 6'', 6''') et qui s'étendent sur une partie prépondérante de la longueur verticale des crayons combustibles mais ne limitent toutefois qu'en-dessous de la section supérieure de canal (L) et la voie verticale de l'écoulement (5') pour l'eau modératrice relativement froide et empêchent une liaison horizontale entre cette eau modératrice et les crayons combustibles, et que la plaque de levage (31; 46; 56) est disposée dans la section supérieure du canal (L).

3. Faisceau d'éléments selon la revendication 1, caractérisé par le fait que les faisceaux partiels sont chacun pourvus d'une plaque de treillis partielle supérieure (22; 22'; 47; 57) disposée sous la plaque de levage commune (31; 46; 56), que les crayons porteurs (2') sont, par leurs extrémités supérieures, en liaison à transmission de forces de traction avec la plaque en treillis partielle supérieure associée (22; 22'; 47; 57) et que chaque plaque en treillis partielle est fixée de façon détachable à la plaque de levage commune, à l'aide d'un dispositif de liaison (32; 54; 59) qui est approprié pour soulever un faisceau partiel, avec la plaque en treillis partielle inférieure (19) et la plaque en treillis partielle supérieure.

4. Faisceau d'éléments combustibles selon la revendication 3, caractérisé par le fait que chaque plaque en treillis partielle supérieure est coincée sur la face inférieure de la plaque de levage commune, à l'aide du dispositif de liaison démontable sus-mentionné, la réalisation étant telle que plusieurs sections de la plaque de levage commune qui portent contre une plaque en treillis partielle supérieure, comportent chacune un trou (45; 45'; 45") qui est disposé coaxialement avec un crayon combustible correspondant et possède un diamètre quelque peu supérieur à celui du bouchon d'extrémité du crayon combustible.

5. Faisceau d'éléments combustibles selon la revendication 3, caractérisé par le fait que chaque plaque en treillis partielle supérieure possède seize positions de crayons combustibles qui sont disposées suivant une grille carrée et seize sections cylindriques essentiellement creuses correspondantes (27; 27'; 50) ainsi que plusieurs sections de liaison (28, 28', 28", 28"', 52, 51) lesquelles relient entre elles les sections cylindriques creuses et délimitent, avec des surfaces extérieures de celles-ci, plusieurs ouvertures de passage (29) pour le milieu de refroidissement du réacteur et qui sont disposées dans la plaque en treillis partielle supérieure, que l'une des sections de liaison est une section médiane (28', 28"', 51) qui est reliée directement avec les quatre sections cylindriques creuses qui se trouvent directement au centre de la plaque en treillis partielle supérieure, et dont deux se situent dans le même plan vertical qui passe par ledit centre et dont chacune entoure un bouchon d'extrémité (25) d'un crayon porteur et que ladite section médiane est reliée mécaniquement au dispositif de liaison (32; 54).

6. Faisceau d'éléments selon la revendication 5, caractérisé par le fait que le dispositif de liaison comporte un boulon (32; 54) dont la tête porte contre une surface, dirigée vers le haut, de la plaque de levage commune et qui traverse la plaque de levage, alors que son extrémité inférieure est vissée dans un trou fileté (30; 53) prévu au centre de la section médiane (28', 28"', 51).

7. Faisceau d'éléments combustibles selon l'une des revendications précédentes, caractérisé par le fait que la plaque de levage commune comporte une section essentiellement carrée, ayant l'allure d'un cadre, laquelle section carrée est entourée, sans jeu notable, par une section correspondante du boîtier de combustible, et qui est pourvue d'une goulotte de répartition (44, 44', 44") pour l'eau, laquelle goulotte s'étend sur la partie prépondérante de la périphérie.

FIG.1

FIG. 2

## FIG. 2A

## FIG. 2B

FIG. 3

FIG. 3A

FIG. 4

FIG. 5

FIG. 6

FIG. 7

FIG. 8

FIG. 9

FIG. 10

FIG. 11